(19) Europäisches Patentamt
European Patent Office
Office européen des brevets

(11) **EP 4 183 479 A1**

(12) **EUROPEAN PATENT APPLICATION**

(43) Date of publication:
24.05.2023 Bulletin 2023/21

(21) Application number: 21209734.9

(22) Date of filing: 22.11.2021

(51) International Patent Classification (IPC):
**B01J 4/00** (2006.01)          **B01J 19/00** (2006.01)
**F02D 9/12** (2006.01)          **F16K 1/38** (2006.01)
**F02D 41/30** (2006.01)

(52) Cooperative Patent Classification (CPC):
**B01J 4/008; B01J 19/0006; F02D 9/02; F02D 9/12;**
**F02D 41/0002; F16K 1/54; F16K 31/004;**
**F16K 31/04; F16K 37/005;** B01J 2204/002;
B01J 2219/00164; B01J 2219/00202;
B01J 2219/00231; F02D 2200/0406

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Technische Hochschule Nuernberg**
**Georg-Simon-Ohm**
**90489 Nuernberg (DE)**

(72) Inventors:
• **Bikas, Georgios**
**85356 Freising (DE)**
• **Falgenhauer, Ralf**
**91183 Abenberg (DE)**
• **Weigand, Peter**
**90491 Nürnberg (DE)**

(74) Representative: **Koplin, Moritz**
**Anne-Conway-Straße 1**
**28359 Bremen (DE)**

(54) **CONTROL OF A FLOW OF A FLUID INTO A REACTION CHAMBER OF AN THERMO-CHEMICAL OR ELECTRO-CHEMICAL ENERGY CONVERSION MACHINE**

(57)      Provided is a system for controlling a flow of a fluid into a reaction chamber of a machine and a corresponding method. The system comprises a Venturi tube through which the fluid is to be fed into the reaction chamber and a conical element, wherein a size of a cross-sectional area of a constriction formed by the Venturi tube can be adapted by positioning the conical element relative to the constriction. The system further comprises an actuator which is configured to position the conical element, wherein the actuator is controlled by a controller that is configured to map a target power output of the machine onto a target value for the size of the cross-sectional area of the constriction.

**Fig. 1a**

EP 4 183 479 A1

**Description**

FIELD

The present disclosure relates to the control of a flow of a fluid into a reaction chamber of an energy conversion machine. In particular, the present disclosure relates to the control of a flow of a fluid into a reaction chamber of a thermo-chemical or electro-chemical energy conversion machine.

BACKGROUND

In thermo-chemical or electro-chemical energy conversion machines two or more reactants (e.g., oxygen and hydrogen) may flow into, and react in, a reaction chamber. When the reactants react, the reaction may result in a pressure increase or a voltage increase that can be used to set a moving part of the machine in motion. The target flow rate of the reactants may depend on a target power output of the machine. For example, if the target power output of the machine increases, the flow rate of the reactants may be increased and if the target power output of the machine decreases, the flow rate of the reactants may be decreased.

SUMMARY

The present invention is directed at a method of controlling a flow of a fluid into a reaction chamber of a thermo-chemical or electro-chemical energy conversion machine and a system for controlling a flow of a fluid into a reaction chamber of a thermo-chemical or electro-chemical energy conversion machine.

The method comprises determining a target power output of the machine and mapping the target power output of the machine onto a target value for a size of a cross-sectional area of a constriction through which the fluid passes. If the target value for the size of the cross-sectional area of the constriction is higher than a current value of the size of the cross-sectional area of the constriction, the size of the cross-sectional area of the constriction through which the fluid passes is increased. If the target value for the size of the cross-sectional area of the constriction is lower than the current value of the size of the cross-sectional area of the constriction, the size of the cross-sectional area of the constriction through which the fluid passes is decreased. Increasing and decreasing the size of the cross-sectional area of the constriction comprise moving a conical element which extends into the constriction relative to the constriction.

In this regard, the term "target power output", as used throughout the description and the claims, particularly refers to a power output which the machine is to deliver according to a control signal received or produced by the machine. Moreover, the term "thermo-chemical or electro-chemical energy conversion machine", as used throughout the description and the claims, particularly refers to a machine which converts chemical energy to kinetic energy. The kinetic energy may be used to propel a vehicle. Furthermore, the formulation "mapping the target power output of the machine onto a target value for a size of a cross-sectional area of a constriction", as used throughout the description and the claims, particularly refers to calculating a target value for the size of the cross-sectional area of the constriction based on the target power output of the machine, or looking up a target value for the size of the cross-sectional area of the constriction which is assigned to the target power output of the machine. The calculating or looking-up may be carried out by a controller. The controller may form part of the machine.

Moreover, the formulation "increasing/decreasing the size of the cross-sectional area of the constriction through which the fluid passes", as used throughout the description and the claims, particularly refers to changing the size of an area of a most constricted section of a tube portion through which the fluid passes. The cross-sectional area may be perpendicular to a (mean) direction of the flow of the fluid. The mean direction of the flow of the fluid may be a direction of a speed vector of the flow integrated over the area/volume of the constriction and divided by the area/volume. Furthermore, the formulation "moving a conical element which extends into the constriction relative to the constriction", as used throughout the description and the claims, particularly refers to a motion parallel to the (mean) direction of the flow of the fluid. The motion may be effectuated by an actuator (which may form part of the machine). The actuator maybe controlled by the controller. In addition, the term "conical element", as used throughout the description and the claims, particularly refers to an element having a portion with an outer surface that can be defined by fixing one end of a line segment at the tip (of the conical element) and sweeping the other end around the circumference of a circular or elliptical flat base (that intersects with the conical element). The flat base may lie in a plane that is perpendicular to the (mean) direction of the flow of the fluid.

The constriction may be formed by a Venturi tube. The Venturi tube may be formed by a converging tube section and a diverging tube section (diffusor). The diffusor may have a conical section with an opening angle between 5° and 20°, 6° and 15°, or 7° and 10° (e.g., 7°).

The constriction may be formed (at a tube section) where the converging tube section and the diverging tube section meet.

The tip of the conical element may point in the (mean) direction of the flow of the fluid. A section of the conical element may have the shape of a cone and the tip may be the apex of said cone.

Mapping the target power output of the machine onto the target value for the size of the cross-sectional area of the constriction may be based on a measured or estimated pressure at a point upstream of the constriction and a measured or estimated pressure at a point downstream of the constriction. For instance, a pressure at the point upstream of the constriction and a pressure at the point downstream of the constriction may be provided that cause the fluid to flow at a predetermined (mean) speed through the constriction which facilitates estimating the flow rate based on the (shape and) size of the cross-sectional area of the constriction. For example, the pressure at the point upstream of the constriction and the pressure at the point downstream of the constriction may cause the fluid to flow at the (local) speed of sound or another predetermined speed through the constriction.

The method may further comprise determining a flow rate of the fluid (e.g., air) based on the size of the cross-sectional area of the constriction and the speed of sound or the other predetermined speed and adjusting a rate of flow of another fluid (e.g., fuel) into the reaction chamber based on the flow rate of the fluid (e.g., air). The other fluid (e.g., fuel) may be a fluid that reacts with the fluid (e.g., air) in the reaction chamber and provides for a pressure increase or a voltage increase that provides for kinetic or electric energy which can be used to set a moving part of the machine in motion.

The machine may be an internal combustion engine, and the reaction chamber may be a combustion chamber of the internal combustion engine. The combustion of the other fluid (which may be a gaseous or liquid fuel) in the reaction chamber may produce heat that increases the pressure of the fluid within the reaction chamber.

The combustion chamber may comprise an element (e.g., a piston) performing a cyclic motion. For each of multiple consecutive cycles (of said element), the target power output of the engine may be remapped onto another target value for the size of the cross-sectional area of the constriction through which the fluid passes if a change in the target power output of the engine is detected.

In other words, the engine may control the flow of the fluid into the combustion chamber for each cycle individually by adjusting a position of the conical element. To this end, the actuator may be enabled to reposition the conical element at a frequency that is equal to or higher than a maximum frequency of the cyclic motion of the element within the combustion chamber. Moreover, the actuator may serve as both, a means for repositioning the conical element but also as an indicator (sensor) for the size of the cross-sectional area of the constriction. That is, the size of the cross-sectional area of the constriction may be monitored by monitoring the state of the actuator.

Moreover, the flow of the fluid into different combustion chambers of an internal combustion engine may be individually controlled if the above steps are performed individually for each combustion chamber.

The system comprises a Venturi tube through which the fluid is to be fed into the reaction chamber and a conical element, wherein a size of a cross-sectional area of a constriction formed by the Venturi tube can be adapted by positioning the conical element relative to the constriction and an actuator which is configured to position the conical element, wherein the actuator is controlled by a controller that is configured to map a target power output of the machine onto a target value for the size of the cross-sectional area of the constriction.

The controller may be further configured to determine a flow rate of the fluid based on the size of the cross-sectional area of the constriction and to adjust a rate of flow of another fluid into the reaction chamber based on the flow rate.

For instance, the system may be configured to provide for a pressure at a point upstream of the constriction and a pressure at a point downstream of the constriction which ensure that the fluid flows at the speed of sound or another predetermined speed through the constriction such that the flow rate can be determined taking into account the size and shape of the constriction.

The controller may be configured to determine a mass of the fluid flown through the constriction within a time interval based on the position of the conical element.

For example, the flow rate may be integrated over the time interval.

The system may be comprised in an internal combustion engine and the reaction chamber may be a combustion chamber.

The combustion chamber may comprise an element performing a cyclic motion. The controller may be configured to cause the conical element to be repositioned by the actuator at least once during each of a second and a third consecutive cyclic motion of said element if a target power output of the engine changes between a first cyclic motion of said element and the second cyclic motion and between the second cyclic motion and the third cyclic motion.

The combustion chamber may further comprise an inlet valve downstream of the Venturi tube and the fluid flown through the Venturi tube may flow through the inlet valve into the combustion chamber.

The internal combustion engine may further comprise another combustion chamber and another Venturi tube through which another fluid is to be fed into the other combustion chamber.

The controller may be further configured to control the flow of the fluid through said Venturi tube and a flow of the other fluid through said other Venturi tube individually. Furthermore, while the fluid flow through said Venturi tubes may be controlled individually, the flow may be coordinated to ensure that the individual power outputs of the combustion chambers add up to the target power output of the engine.

Notably, the features of the system, the machine, and the engine may be features of the method and vice versa.

BRIEF DESCRIPTION OF THE DRAWINGS

The foregoing aspects and many of the attendant advantages will become more readily appreciated as the same become better understood by reference to the following description of embodiments, when taken in conjunction with the accompanying drawings, wherein like reference numerals refer to like parts throughout the various views, unless otherwise specified.

Fig. 1a shows a longitudinal section of a constriction and a conical element which extends into the constriction.

Fig. 1b shows a cross section of the constriction and the conical element depicted in Fig. 1a according to a first example.

Fig. 1c shows a cross section of the constriction and the conical element depicted in Fig. 1a according to a second example.

Fig. 2a shows a longitudinal section of the constriction and the conical element which extends into the constriction which differs from the arrangement shown in Fig. 1a in that the conical element has been moved relative to the constriction.

Fig. 2b shows a cross section of the constriction and the conical element depicted in Fig. 2a in accordance with the first example.

Fig. 2c shows a cross section of the constriction and the conical element depicted in Fig. 2a in accordance with the second example.

Fig. 3 illustrates mapping a target power output of a machine onto a target value for the size of the cross-sectional area of the constriction through which the fluid passes.

Fig. 4 shows a longitudinal section of the constriction, the conical element which extends into the constriction, and an actuator for repositioning the conical element.

Fig. 4a illustrates determining a volume or mass of a fluid flowing through the constriction during a specific period of time.

Fig. 5 schematically illustrates a fuel cell powered machine provided with a system for controlling the flow of oxygen and hydrogen into a reaction chamber of the fuel cell.

Fig. 6 schematically illustrates a system for controlling the flow of air into a combustion chamber of an internal combustion engine.

Fig. 7 illustrates how further parts of the internal combustion engine may interact with the system shown in Fig. 6.

Fig. 8 illustrates how further parts of the internal combustion engine may interact with the system shown in Fig. 7.

Fig. 9 illustrates how the system shown in Fig. 6 may be used to control combustion chambers individually.

Fig. 10 illustrates how the system shown in Fig. 6 may be used to control consecutive cycles of a combustion chamber individually.

Fig. 11 shows a flow chart of a process of controlling a flow of a fluid into a reaction chamber of a thermo-chemical or electro-chemical energy conversion machine.

Notably, the drawings are not drawn to scale and unless otherwise indicated, they are merely intended to conceptually illustrate the structures and procedures described herein.

## DESCRIPTION OF EMBODIMENTS

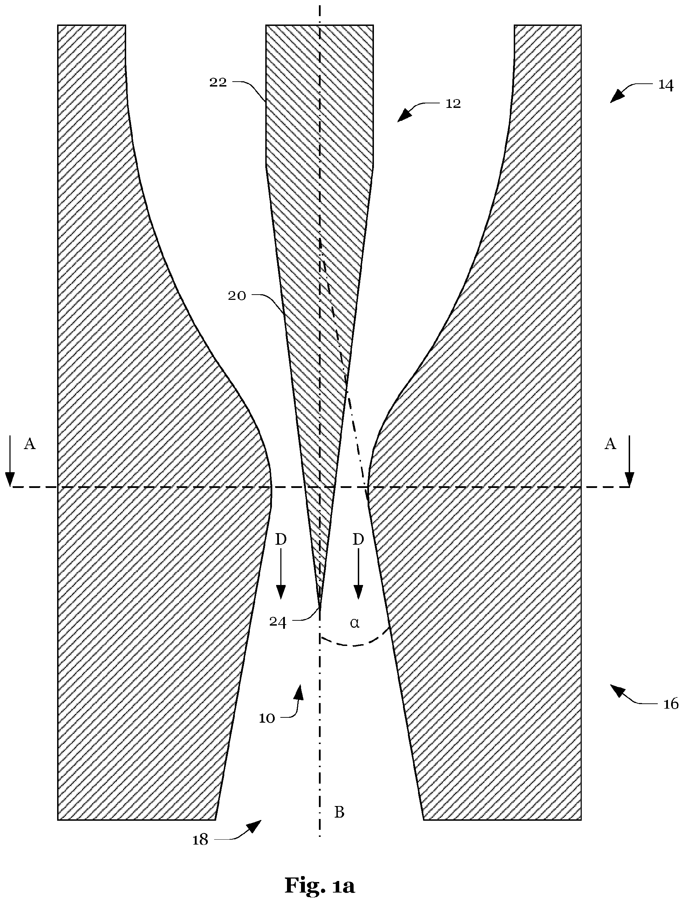

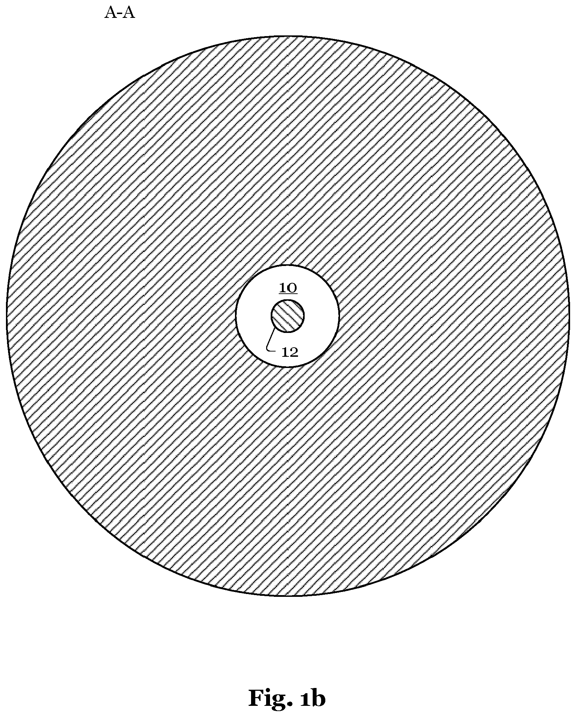

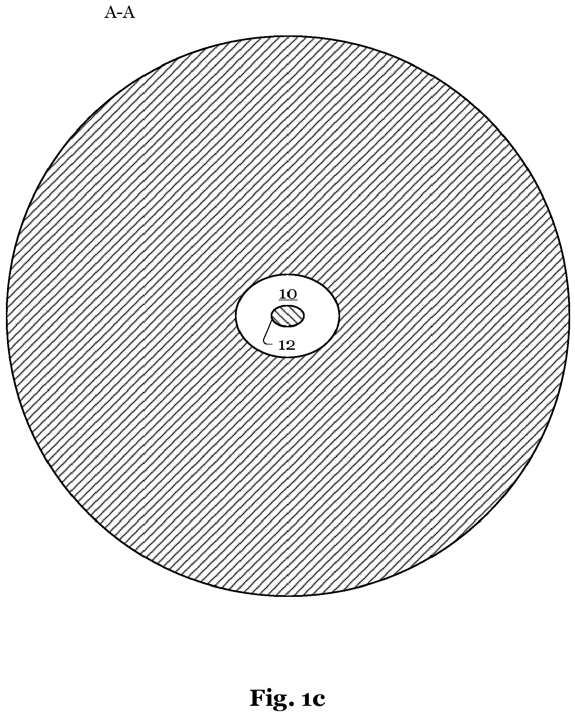

Fig. 1a shows a longitudinal section of constriction 10 and conical element 12 which extends into constriction 10. Constriction 10 is formed by a Venturi tube. The Venturi tube is formed by converging tube section 14 and diverging tube section 16 (diffusor). Converging tube section 14 has a concave inner surface. Diffusor 16 comprises conical section 18 which has an opening angle $\alpha$ of (about) 7°. Conical element 12 comprises first section 20 which has the shape of a cone and second section 22 which has the shape of a cylinder. Tip 24 of conical element 12 points in the mean direction D of the flow of the fluid (e.g., oxygen, hydrogen, or air) passing through constriction 10. As indicated in Fig. 1b and Fig. 1c, the cross-section of conical element 12 preferably has a circular or elliptical contour (although other contours are also possible).

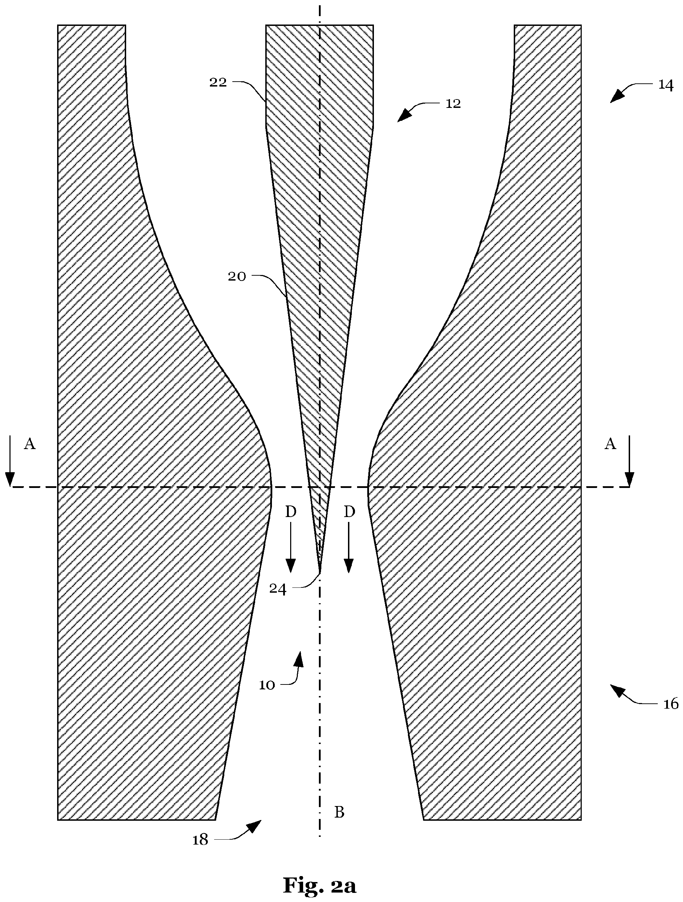

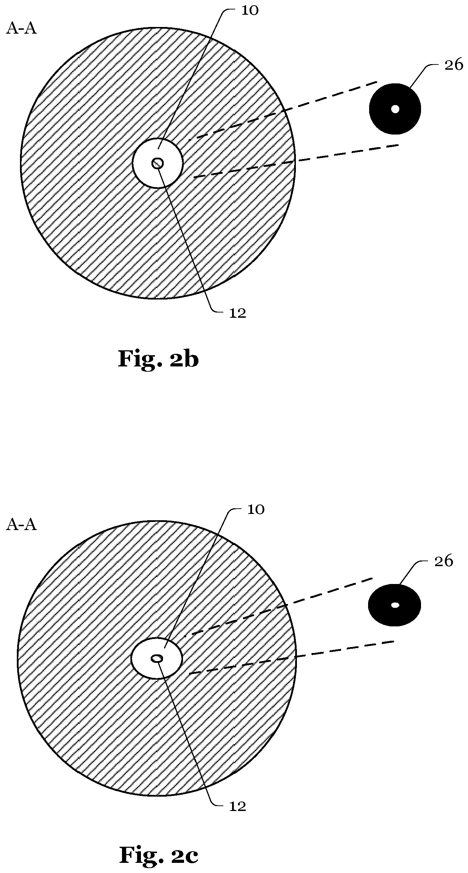

As shown in Fig. 2a, Fig. 2b, and Fig. 2c, conical element 12 may be moved relative to constriction 10. When conical element 12 is moved relative to constriction 10, the size of cross-sectional area 26 of constriction 10 changes. For instance, if conical element 12 is moved relative to constriction 10 along axis B in a direction opposite to flow direction D, the size of cross-sectional area 26 of constriction 10 increases. If conical element 12 is moved relative to constriction 10 along axis B in flow direction D, the size of cross-sectional area 26 of constriction 10 decreases. Repositioning conical element 12 relative to constriction 10 along axis B thus allows controlling the flow rate of a fluid passing through constriction 10. Moreover, if the (local) Mach number within constriction 10 equals 1, the flow rate can be directly derived from the size of cross-sectional area 26.

In a compressible flow, the continuity equation and the energy equation may be used to describe the state of the fluid. According to the stream filament theory, the following equations are particularly relevant:

$$\frac{T_t}{T} = \left(\frac{a_t}{a}\right)^2 = \frac{\kappa - 1}{2} * M^2 + 1$$

$$\frac{p_t}{p} = \left(\frac{T_t}{T}\right)^{\frac{\kappa}{\kappa-1}} = \left(\frac{\kappa - 1}{2} * M^2 + 1\right)^{\frac{\kappa}{\kappa-1}}$$

$$\frac{\rho_t}{\rho} = \left(\frac{T_t}{T}\right)^{\frac{1}{\kappa-1}} = \left(\frac{\kappa - 1}{2} * M^2 + 1\right)^{\frac{1}{\kappa-1}}$$

Therein, $T$ stands for the temperature, p for the pressure, $\rho$ for the density, $M$ for the local Mach number, wherein the index "t" identifies the stagnation properties, and $\kappa$ stands for the isentropic exponent. In the following, "*" identifies the variables for a (local) Mach number of 1.

$$\frac{a^*}{a_t} = \left(\frac{2}{\kappa + 1}\right)^{0,5} \qquad \xrightarrow{\kappa=1,4} \frac{a^*}{a_t} = 0,913$$

$$\frac{p^*}{p_t} = \left(\frac{2}{\kappa + 1}\right)^{\frac{\kappa}{\kappa-1}} \qquad \xrightarrow{\kappa=1,4} \frac{p^*}{p_t} = 0,528$$

$$\frac{\rho^*}{\rho_t} = \left(\frac{2}{\kappa - 1}\right)^{\frac{1}{\kappa-1}} \qquad \xrightarrow{\kappa=1,4} \frac{\rho^*}{\rho_t} = 0,634$$

$$A^* = \frac{\dot{m}}{\rho^* * a^*}$$

$$\left(\frac{A}{A^*}\right)^2 = \frac{1}{M^2} * \left[\frac{2}{\kappa + 1} * \left(1 + \frac{\kappa - 1}{2} * M^2\right)\right]^{\frac{\kappa+1}{\kappa-1}}$$

Therein, A stands for cross-sectional area 26 of constriction 10. If the mass flow, the stagnation properties, and the cross-sectional profile are provided, the equations provide the Mach number profile, the temperature profile, the pressure profile, and the density profile. Hence, varying the size of the area of cross-sectional area 26 of constriction 10 may be used to control the mass flow.

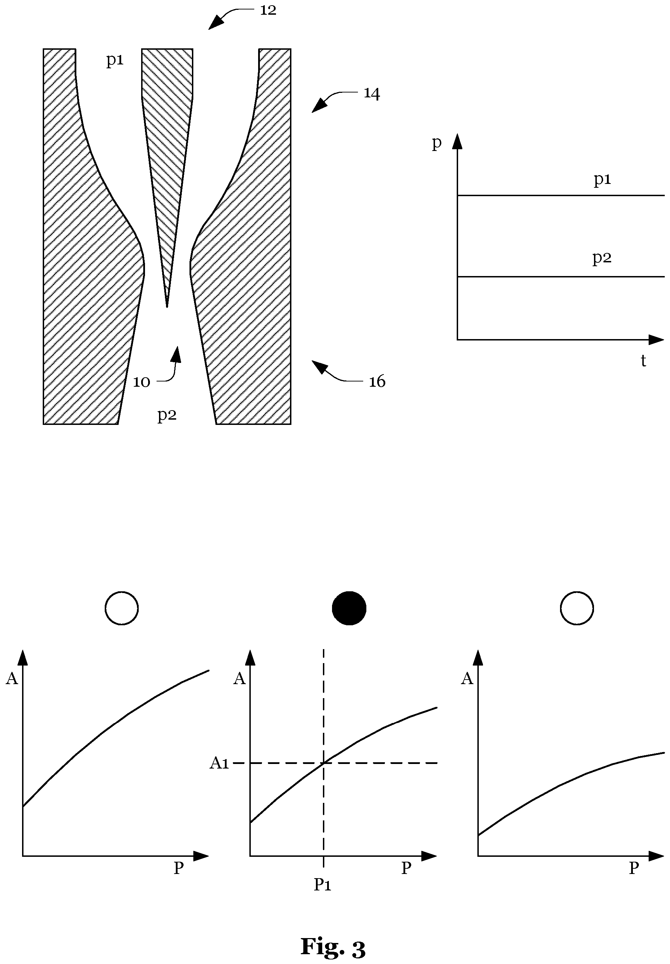

As illustrated in Fig. 3, mapping a target power output of a machine onto a target value for the size of cross-sectional area 26 of constriction 10 may involve measuring or estimating a fluid pressure pi upstream of constriction 10 and measuring or estimating a fluid pressure p2 downstream of constriction 10. Depending on the measured or estimated fluid pressures pi and p2, a curve (out of a plurality of available curves) or a mathematical formula (out of a plurality of available formulas) representing (or approximating) the curve may be selected (as indicated by the circles above the available curves). The selected curve or mathematical formula maps target power output Pi of the machine onto target value Ai for the size of cross-sectional area 26 of constriction 10. If the measured or estimated fluid pressures p1 and p2 change, another curve or mathematical formula may be selected to account for the change. If fluid pressures p1 and p2 do not change (during normal operation), only a single curve or a single mathematical formula may be used. Notably, a curve may be stored in the form of a look-up table.

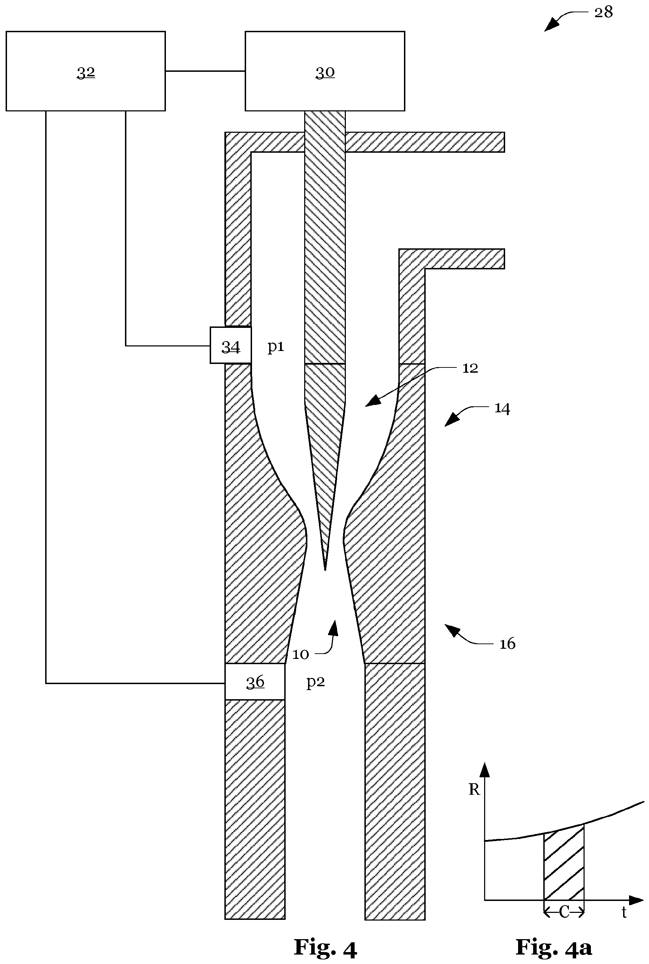

Fig. 4 shows system 28 comprising the Venturi tube and conical element 12 depicted in Fig. 1a, Fig. 1b, Fig. 1c, Fig. 2a, Fig. 2b, Fig. 2c, and Fig. 3, actuator 30, and controller 32. Actuator 30 which may comprise an electric motor or a piezoelectric element is configured to reposition conical element 12 relative to constriction 10 in response to a control signal from controller 32. Controller 32 may comprise a processor and a memory storing instructions which when executed by the processor implement a program that maps target power output Pi of the machine onto target value Ai for the size of cross-sectional area 26 of constriction 10 as described with reference to Fig. 3. Controller 32 may be connected to pressure sensor 34 which measures fluid pressure pi upstream of constriction 10 and pressure sensor 36 which measures fluid pressure p2 downstream of constriction 10.

Controller 32 may further use the positioning information available at controller 32 or a position signal from actuator 30 (e.g., actuator 30 may update the position signal at a frequency of 1kHz or higher) to determine a flow rate R of the fluid passing through constriction 10. When determining the flow rate R, controller 32 may also take into account fluid pressure pi upstream of constriction 10 and fluid pressure p2 downstream of constriction 10 (if available). Flow rate R derived from the positioning information available at controller 32 or the position signal from actuator 30 may be integrated over time interval C to determine a volume or a mass of the fluid (e.g., oxygen, hydrogen, or air) flown into the reaction chamber (during that time interval), as illustrated in Fig. 4a. For example, oxygen may react with another fluid at a certain phase in a cycle and the oxygen available (throughout the cycle) may be determined by integrating the flow rate over a time interval during which oxygen is fed into the reaction chamber (within said cycle).

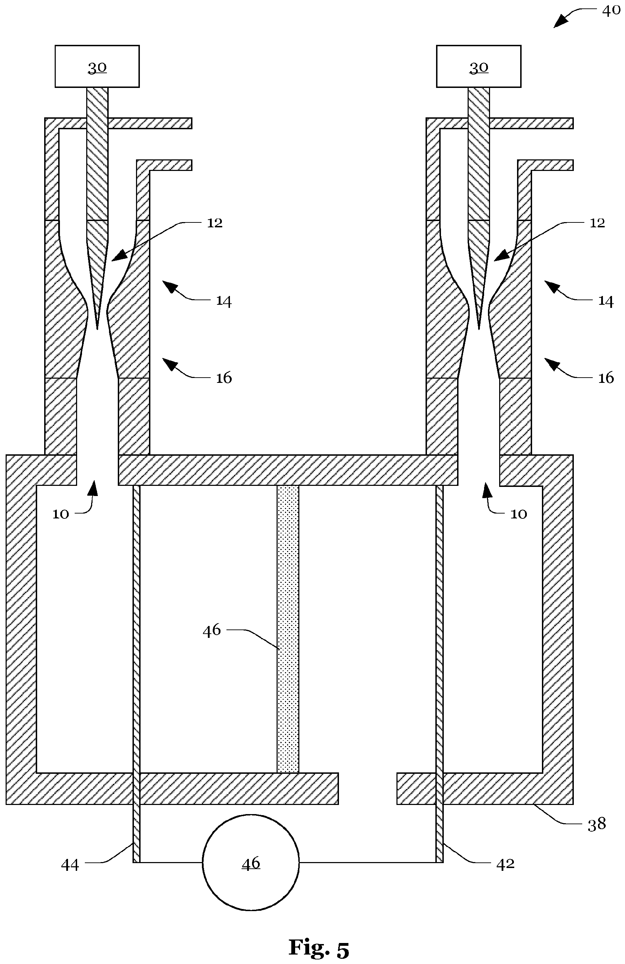

As illustrated in Fig. 5, the Venturi tube and conical element 12 depicted in Fig. 1a, Fig. 1b, Fig. 1c, Fig. 2a, Fig. 2b, Fig. 2c, Fig. 3, and Fig. 4 may be used to control a flow of gasses (e.g., oxygen and hydrogen) into reaction chamber 38 of machine 40. Reaction chamber 38 may be part of a fuel cell and comprise electrodes 42 and 44 and membrane 46. Machine 40 further comprises motor 46 which is configured to convert electric energy produced by the fuel cell into kinetic energy which may be used to propel a vehicle. Notably, machine 40 may comprise multiple fuel cells and further electric or electronic components which have not been included in Fig. 5 to avoid obscuring the invention. Furthermore, a vehicle which comprises machine 40 may further comprise a container for supplying the hydrogen to the fuel cell(s), whereas the oxygen may be drawn from the surrounding air.

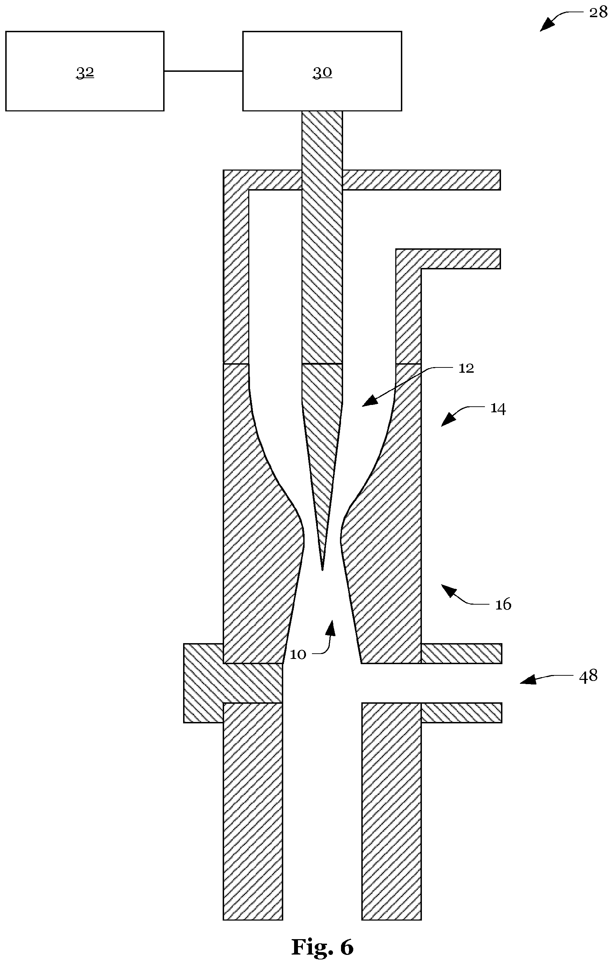

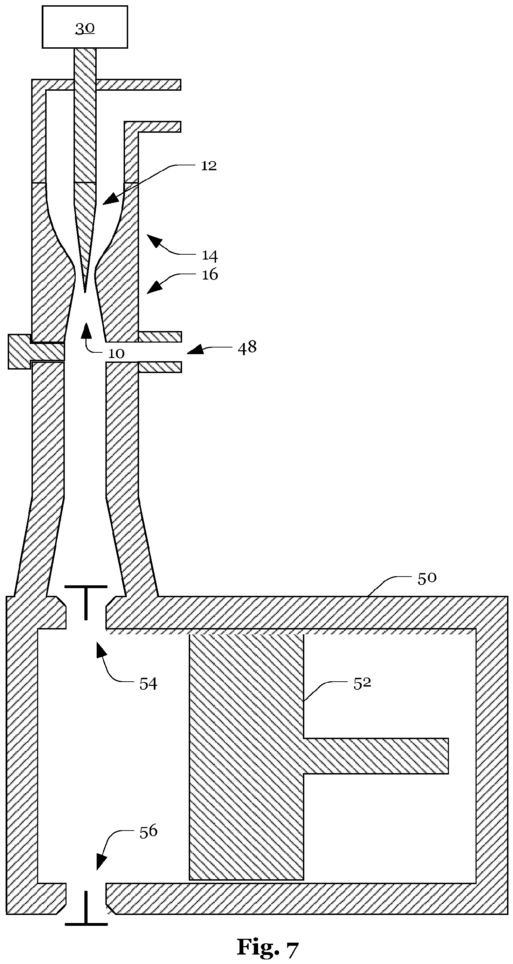

As shown in Fig. 6, a fluid flow through constriction 10 may also be mixed with another fluid flow before entering a reaction chamber. To this end, a tube section downstream of constriction 10 may comprise opening 48 through which the other fluid can be added to the fluid flow passing through constriction 10. For example, as illustrated in Fig. 7, the Venturi tube and conical element 12 depicted in Fig. 1a, Fig. 1b, Fig. 1c, Fig. 2a, Fig. 2b, Fig. 2c, Fig. 3, Fig. 4, and Fig. 6 may be used to control a flow of air (and thus oxygen) into combustion chamber 50 of an internal combustion engine, wherein fuel is added to the air through opening 48. Combustion chamber 50 comprises element 52 (e.g., a piston) performing a cyclic motion propelled by the burned fuel. Combustion chamber 50 further comprises inlet valve 54 and outlet valve 56 for controlling during which phases fuel mixed with air enters combustion chamber 50 and exhaust gasses are discharged from combustion chamber 50.

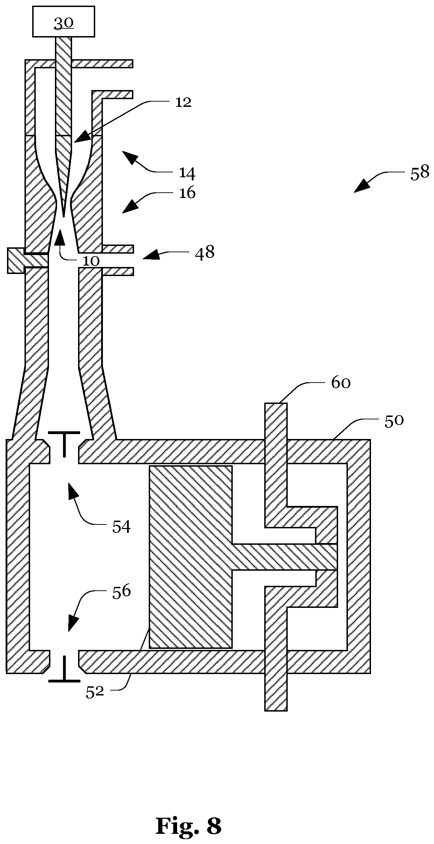

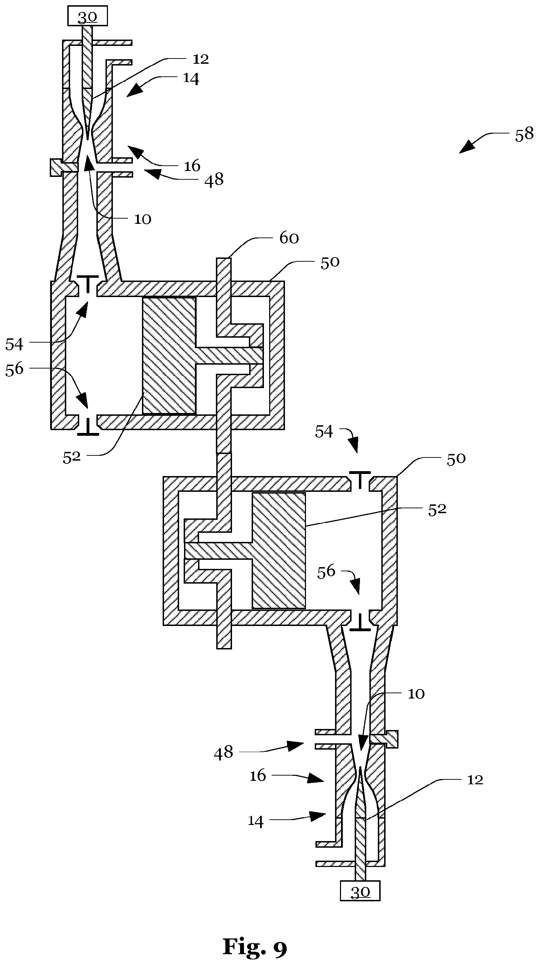

While element 52 completes a cycle, inlet valve 54 may be opened once to flow fuel mixed with air into combustion chamber 50 and outlet valve 56 may be opened once to discharge exhaust gases from combustion chamber 50. As shown in Fig. 8, machine 58 (internal combustion engine) may further comprise crankshaft 60 for converting a linear motion of element 52 into a rotational motion. As shown in Fig. 9, internal combustion engine 58 may further comprise another combustion chamber 50 and both combustion chambers 50 may be connected by (a single) crankshaft 60. In addition, internal combustion engine 58 may further comprise another Venturi tube and another conical element 12 to control a flow of air (and thus oxygen) into the other combustion chamber 50. The Venturi tubes and conical elements 12 allow controlling the combustion chambers 50 individually.

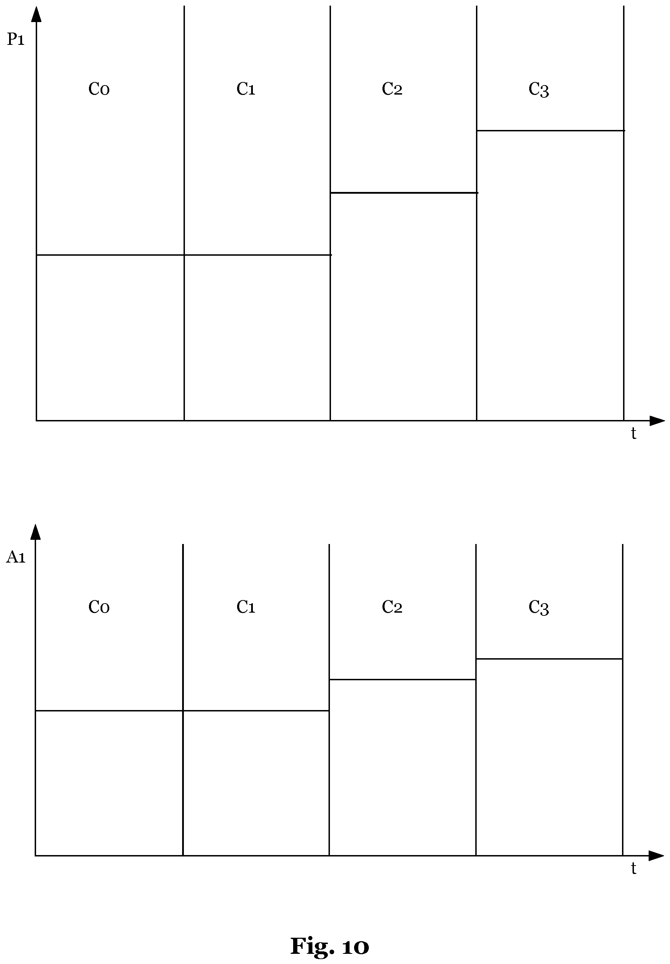

Fig. 10 illustrates how consecutive cycles within the same combustion chamber can be controlled individually using the Venturi tube and conical element 12 depicted in Fig. 1a, Fig. 1b, Fig. 1c, Fig. 2a, Fig. 2b, Fig. 2c, Fig. 3, Fig. 4, Fig. 6., Fig. 7, Fig. 8, and Fig. 9. For each cycle of a series of consecutive cycles Co to $C_3$, controller 32 may determine a target power output Pi of engine 58. The target power output Pi may stay the same as between cycle C0 and cycle C1 or may change as between cycle C1 and cycle C2 and cycle C2 and cycle C3. Notably, although cycles C0 to C3 are depicted as being equal in length, cycles C0 to C3 may also differ in length. Once target power output P1 of engine 58 is determined for a cycle, controller 32 may map target power output Pi onto target value Ai for the size of cross-sectional area 26 of constriction 10. For example, controller 32 may map target power output Pi onto a target value Ai for the size of cross-sectional area 26 of constriction 10 using the process described with reference to Fig. 3.

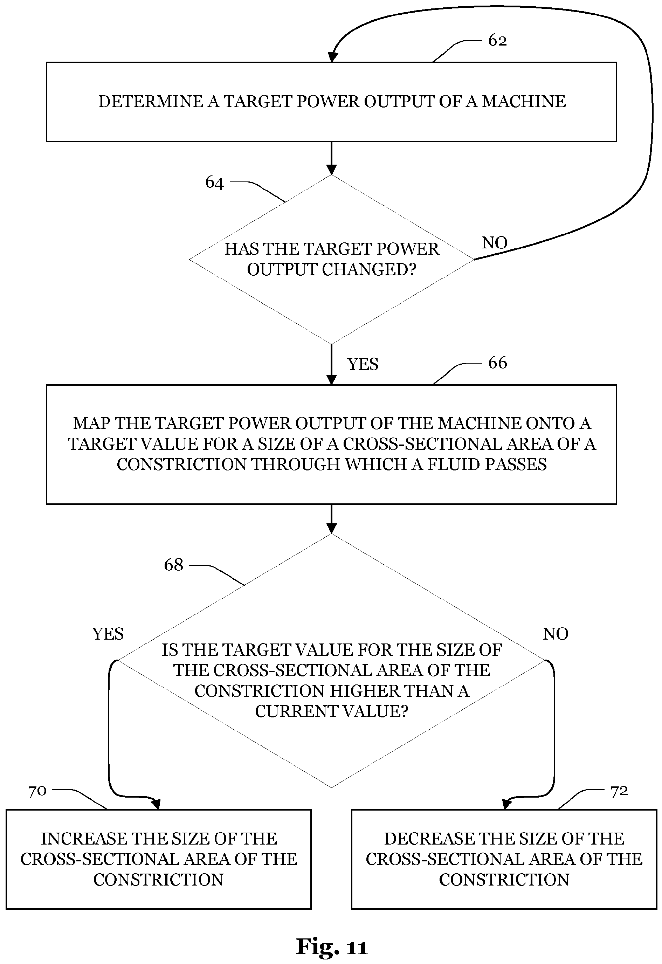

Fig. 11 shows a flow chart of the process of controlling the flow of a fluid into reaction chamber 38 of machine 40 or the flow of oxygen into combustion chamber 50 of engine 58. At step 62, the process starts with determining target power output Pi of machine 40 or engine 58. At decision block 64, it is decided whether target power output Pi has changed. If target power output Pi has not changed such as between cycle C0 and cycle C1 in Fig. 10, the process may loop back to step 62. If target power output Pi has changed such as between cycle C1 and cycle C2 or between cycle C2 and cycle $C_3$ in Fig. 10, the process may proceed to step 66 where target power output Pi of machine 40 or engine 58 is mapped onto target value Ai for a size of cross-sectional area 26 of constriction 10. The process may then proceed to decision block 68 at which it is decided whether target value Ai for the size of cross-sectional area 26 of constriction 10 is higher than the current value. If it is, the process proceeds to step 70 at which the size of cross-sectional area 26 of constriction 10 is increased. If it is not, the process proceeds to step 72 at which the size of cross-sectional area 26 of constriction 10 is decreased. The process may then loop back to step 62 for the next cycle.

REFERENCE SIGNS LIST

| | |
|---|---|
| 10 | constriction |
| 12 | conical element |
| 14 | converging tube section |
| 16 | diverging tube section (diffusor) |
| 18 | conical section |
| 20 | first section |
| 22 | second section |
| 24 | tip |
| 26 | cross-sectional area |
| 28 | system |
| 30 | actuator |
| 32 | controller |
| 34 | pressure sensor |
| 36 | pressure sensor |
| 38 | chamber |
| 40 | machine |
| 42 | electrode |
| 44 | electrode |
| 46 | motor |
| 48 | opening |
| 50 | chamber |
| 52 | element performing a cyclic motion (piston) |
| 54 | inlet valve |
| 56 | outlet valve |
| 58 | machine (internal combustion engine) |
| 60 | crankshaft |
| 62 | step |
| 64 | decision |
| 66 | step |
| 68 | decision |

| 70 | step |
|---|---|
| 72 | step |
| A | size of the cross-sectional area of the constriction |
| A1 | target value for the size of the cross-sectional area of the constriction |
| B | axis |
| D | flow direction |
| C | time interval |
| C0 | zeroth cycle |
| C1 | first cycle |
| C2 | second cycle |
| $C_3$ | third cycle |
| M | local Mach number |
| P | power output |
| Pi | target power output |
| p | pressure |
| pi | pressure (upstream) |
| p2 | pressure(downstream) |
| $T$ | temperature |
| $\kappa$ | isentropic exponent |
| $\rho$ | density |

**Claims**

1.  A method of controlling a flow of a fluid into a reaction chamber (38, 50) of a thermo-chemical or electro-chemical energy conversion machine (40, 58), comprising:

    determining (62) a target power output (Pi) of the machine (40, 58);
    mapping (66) the target power output (Pi) of the machine (40, 58) onto a target value (Ai) for a size of a cross-sectional area (26) of a constriction (10) through which the fluid passes;
    increasing (70) the size of the cross-sectional area (26) of the constriction (10) through which the fluid passes if the target value (Ai) for the size of the cross-sectional area (26) of the constriction (10) is higher than a current value of the size of the cross-sectional area (26) of the constriction (10); and
    decreasing (72) the size of the cross-sectional area (26) of the constriction (10) through which the fluid passes if the target value (Ai) for the size of the cross-sectional area (26) of the constriction (10) is lower than the current value of the size of the cross-sectional area (26) of the constriction (10);
    wherein increasing (70) and decreasing (72) the size of the cross-sectional area (26) of the constriction (10) comprise moving a conical element (12) which extends into the constriction (10) relative to the constriction (10).

2.  The method of claim 1, wherein the constriction (10) is formed by a Venturi tube and wherein a tip (24) of the conical element (12) points in a direction (D) of the flow of the fluid.

3.  The method of claim 2, wherein mapping (66) the target power output (Pi) of the machine (40, 58) onto the target value for the size of the cross-sectional area (26) of the constriction (10) is based on a measured or estimated pressure (pi) at a point upstream of the constriction (10) and a measured or estimated pressure (p2) at a point downstream of the constriction (10).

4.  The method of claim 3, wherein the pressure (pi) at the point upstream of the constriction (10) and the pressure (p2) at the point downstream of the constriction (10) causes the fluid to flow at the speed of sound or another predetermined speed through the constriction (10).

5.  The method of claim 4, further comprising:

    determining a flow rate (R) of the fluid based on the size of the cross-sectional area (26) of the constriction (10) and the speed of sound or the other predetermined speed; and
    adjusting a rate of flow of another fluid into the reaction chamber (38, 50) based on the flow rate (R) of the fluid.

6.  The method of any one of claims 1 to 5, wherein the machine (40, 58) is an internal combustion engine (58), and the reaction chamber (38, 50) is a combustion chamber (50) of the internal combustion engine (58).

7. The method of claim 6, wherein said combustion chamber (50) comprises an element (52) performing a cyclic motion and wherein, for each of multiple consecutive cycles (C1, C2, C3), the target power output (P1) of the engine (58) is remapped onto another target value (A1) for the size of the cross-sectional area (26) of the constriction (10) through which the fluid passes if a change in the target power output (P1) of the engine (58) is detected.

8. A system (28) for controlling a flow of a fluid into a reaction chamber (38, 50) of a machine (40, 58), comprising:

   a Venturi tube through which the fluid is to be fed into the reaction chamber (38, 50) and a conical element (12), wherein a size of a cross-sectional area (26) of a constriction (10) formed by the Venturi tube can be adapted by positioning the conical element (12) relative to the constriction (10); and
   an actuator (30) which is configured to position the conical element (12), wherein the actuator (30) is controlled by a controller (32) that is configured to map a target power output (P1) of the machine (40, 58) onto a target value (A1) for the size of the cross-sectional area (26) of the constriction (10).

9. The system (28) of claim 8, wherein the controller (32) is further configured to determine a flow rate (R) of the fluid based on the size (A) of the cross-sectional area (26) of the constriction (10) and to adjust a rate of flow of another fluid into the reaction chamber (38,50) based on the flow rate (R).

10. The system (28) of claim 9, wherein the controller (32) is configured to determine a mass of the fluid flown through the constriction (10) within a time interval (C) based on the position of the conical element (12).

11. An internal combustion engine (58) comprising the system (28) of any one of claims 8 to 10, wherein the reaction chamber (38, 50) is a combustion chamber (50).

12. The internal combustion engine (58) of claim 11, wherein said combustion chamber (50) comprises an element (52) performing a cyclic motion and wherein said controller (32) is configured to cause the conical element (12) to be repositioned by the actuator (30) at least once during each of a second and a third consecutive cyclic motion of said element (52) if a target power output (P1) of the engine (58) changes between a first cyclic motion of said element (52) and the second cyclic motion and between the second cyclic motion and the third cyclic motion.

13. The internal combustion engine (58) of claim 12, wherein said combustion chamber (50) further comprises an inlet valve (54) downstream of the Venturi tube and wherein the fluid flown through the Venturi tube flows through the inlet valve (54) into the combustion chamber (50).

14. The internal combustion engine of any one of claims 11 to 13, further comprising another combustion chamber and another Venturi tube through which another fluid is to be fed into the other combustion chamber.

15. The internal combustion engine of claim 14, wherein the controller (32) is further configured to control the flow of the fluid through said Venturi tube and a flow of the other fluid through said other Venturi tube individually.

**Fig. 1a**

A-A

**Fig. 1b**

A-A

10

12

**Fig. 1c**

**Fig. 2a**

A-A

10

26

12

**Fig. 2b**

A-A

10

26

12

**Fig. 2c**

**Fig. 3**

**Fig. 4**                    **Fig. 4a**

**Fig. 5**

**Fig. 6**

**Fig. 7**

**Fig. 8**

**Fig. 9**

P1

C0  C1  C2  C3

t

A1

C0  C1  C2  C3

t

**Fig. 10**

DETERMINE A TARGET POWER OUTPUT OF A MACHINE ⟍ 62

64 ⟍ HAS THE TARGET POWER OUTPUT CHANGED?

NO

YES ⟍ 66

MAP THE TARGET POWER OUTPUT OF THE MACHINE ONTO A TARGET VALUE FOR A SIZE OF A CROSS-SECTIONAL AREA OF A CONSTRICTION THROUGH WHICH A FLUID PASSES

68 ⟍ IS THE TARGET VALUE FOR THE SIZE OF THE CROSS-SECTIONAL AREA OF THE CONSTRICTION HIGHER THAN A CURRENT VALUE?

YES

NO

70 ⟍ INCREASE THE SIZE OF THE CROSS-SECTIONAL AREA OF THE CONSTRICTION

DECREASE THE SIZE OF THE CROSS-SECTIONAL AREA OF THE CONSTRICTION ⟍ 72

**Fig. 11**

Europäisches
Patentamt

European
Patent Office

Office européen
des brevets

# EUROPEAN SEARCH REPORT

Application Number

EP 21 20 9734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/333671 A1 (WALSER MICHAEL W [US] ET AL) 19 December 2013 (2013-12-19) * paragraphs [0007], [0031], [0034], [0045], [0058], [0087], [0093], [0099], [0110], [0144], [0146]; claims; figures 1, 3, 7, 10a, 10b, 10c * ----- | 1-15 | INV. B01J4/00 B01J19/00 F02D9/12 F16K1/38 F02D41/30 |
| X A | US 5 368 273 A (DANTE LUCIAN J [US]) 29 November 1994 (1994-11-29) * column 1, lines 33-41; claims; figures 1, 2 * * column 2, lines 18-34 * ----- | 1-4,6,8, 11,14,15 5,7,9, 10,12,13 | |
| A | GB 2 109 860 A (FIAT AUTO SPA) 8 June 1983 (1983-06-08) * page 1, lines 50-62, 123-126; claims; figure 1 * * page 2, lines 35-39 * ----- | 1-15 | |
| A | US 3 953 548 A (KNAPP HEINRICH ET AL) 27 April 1976 (1976-04-27) * column 2, lines 9-23; claims; figures * * column 4, lines 4-63 * ----- | 1-15 | TECHNICAL FIELDS SEARCHED (IPC) B01J F16K F02D |

The present search report has been drawn up for all claims

| Place of search | Date of completion of the search | Examiner |
|---|---|---|
| Munich | 7 April 2022 | Serra, Renato |

EPO FORM 1503 03.82 (P04C01)

## ANNEX TO THE EUROPEAN SEARCH REPORT
## ON EUROPEAN PATENT APPLICATION NO.

EP 21 20 9734

This annex lists the patent family members relating to the patent documents cited in  the above-mentioned European search report.
The members are as contained in the European Patent Office EDP file on
The European Patent Office is in no way liable for these particulars which are merely given for the purpose of information.

07-04-2022

| Patent document cited in search report | | Publication date | Patent family member(s) | | Publication date |
|---|---|---|---|---|---|
| US 2013333671 | A1 | 19-12-2013 | BR | 112014031712 A2 | 27-06-2017 |
| | | | CN | 103958874 A | 30-07-2014 |
| | | | CN | 107762677 A | 06-03-2018 |
| | | | EP | 2861860 A1 | 22-04-2015 |
| | | | JP | 6232422 B2 | 15-11-2017 |
| | | | JP | 2015525322 A | 03-09-2015 |
| | | | KR | 20150029648 A | 18-03-2015 |
| | | | KR | 20200018731 A | 19-02-2020 |
| | | | RU | 2014151408 A | 10-08-2016 |
| | | | US | 2013333671 A1 | 19-12-2013 |
| | | | US | 2018223774 A1 | 09-08-2018 |
| | | | US | 2019293027 A1 | 26-09-2019 |
| | | | US | 2022099049 A1 | 31-03-2022 |
| | | | WO | 2013192331 A1 | 27-12-2013 |
| US 5368273 | A | 29-11-1994 | NONE | | |
| GB 2109860 | A | 08-06-1983 | DE | 3242833 A1 | 01-06-1983 |
| | | | ES | 268609 U | 16-05-1983 |
| | | | FR | 2516984 A1 | 27-05-1983 |
| | | | GB | 2109860 A | 08-06-1983 |
| | | | IT | 1145131 B | 05-11-1986 |
| US 3953548 | A | 27-04-1976 | DE | 2346099 A1 | 27-03-1975 |
| | | | FR | 2244081 A1 | 11-04-1975 |
| | | | JP | S5055721 A | 16-05-1975 |
| | | | US | 3953548 A | 27-04-1976 |

EPO FORM P0459

For more details about this annex : see Official Journal of the European Patent Office, No. 12/82